Europäisches Patentamt

**European Patent Office**

**Office européen des brevets**

(11) Numéro de publication: **0 126 436**
A1

(12)

# DEMANDE DE BREVET EUROPEEN

(21) Numéro de dépôt: **84105602.1**

(22) Date de dépôt: **17.05.84**

(51) Int. Cl.³: **B 25 B 1/22,** B 23 B 45/14, B 23 Q 3/06

(30) Priorité: **20.05.83 FR 8308558**

(43) Date de publication de la demande: **28.11.84** **Bulletin 84/48**

(84) Etats contractants désignés: **AT BE CH DE FR GB IT LI LU NL SE**

(71) Demandeur: **Petit, Pierre, 22 rue des Vergers, F-68100 Mulhouse (FR)**

(72) Inventeur: **Petit, Pierre, 22 rue des Vergers, F-68100 Mulhouse (FR)**

(74) Mandataire: **Nithardt, Roland, CABINET ROLAND NITHARDT 2, rue du 17 Novembre, F-68100 Mulhouse (FR)**

(54) Dispositif de positionnement d'un étau sur une embase de perceuse à colonne.

(57) L'invention concerne un dispositif permettant de maintenir ou de déplacer un étau dans une position précise en plan sur une embase d'une perceuse à colonne.

Le dispositif comporte un organe de fixation (6) de l'ensemble du dispositif à la colonne, un support d'étau (8) reposant sur une surface horizontale de l'embase, et un cadre de liaison (7) réunissant l'organe de fixation et le support d'étau. Le cadre de liaison est réliable en longueur au moyen d'un galet (43) pour déplacer l'étau en translation dans une direction radiale par rapport à la colonne. Le support d'étau peut comporter un dispositif de pivotement.

Le dispositif selon l'invention s'adapte à tous types d'embase de perceuse à colonne.

0126436

# DISPOSITIF DE POSITIONNEMENT D'UN ETAU SUR UNE EMBASE DE PERCEUSE A COLONNE .-

La présente invention concerne un dispositif de positionnement d'un étau sur une embase solidaire d'une colonne verticale, notamment une embase de perceuse à colonne.

On connaît déjà des perceuses à colonne ou des embases de perceuse qui sont équipées de gorges ou de rainures dans lesquelles on engage les têtes de divers boulons, pour fixer dans la position désirée sur une surface horizontale de l'embase, une pièce à percer ou un étau portant cette pièce. L'utilisateur tâtonne pour trouver l'emplacement convenable de l'étau ou de la pièce à travailler, serrée entre les mors de l'étau, par rapport à l'axe de la perceuse, la position de cet axe étant fixe par rapport à la colonne. Dans d'autres formes d'exécution, l'embase ou la colonne peuvent porter un plateau pivotant autour d'un axe vertical et supportant la pièce ou un étau, par exemple pour permettre de percer une série de trous disposés en arc de cercle. Toutefois, ces dispositifs présentent un nombre insuffisant de degrés de liberté.

Dans le but d'offrir un plus grand nombre de degrés de liberté pour la position de l'étau, la demande internationale PCT publiée sous le numéro WO 82/03587 décrit un étau qui peut être fixé sur l'embase d'une perceuse à colonne par l'intermédiaire d'une équerre de support. Cette équerre comporte notamment, dans sa partie centrale qui est appliquée sur l'embase, un évidement allongé dans lequel passe un boulon de serrage vissé dans l'embase. On peut ainsi amener l'étau à un emplacement quelconque dans une zone horizontale de l'embase de la perceuse ou même à l'extérieur de cette embase, par un mouvement de rotation autour du boulon et de translation de l'évidement allongé le long de ce boulon, puis fixer l'étau en position en serrant le boulon. Cependant, un tel dispositif ne permet pas de déplacer l'étau pendant le travail, car dès qu'on desserre le boulon de serrage, l'étau est mobile en plan dans toutes les directions. En outre, on ne peut pas déplacer la pièce suivant une direction imposée ou la faire pivoter autour d'un axe vertical dont on choisit librement la position.

0126436

Par conséquent, la présente invention a pour but essentiel de fournir un dispositif permettant à la fois de maintenir en place un étau sur une embase horizontale équipée d'une colonne verticale pour une perceuse, et de déplacer cet étau en translation avec précision.

De préférence, le dispositif doit permettre un pivotement de l'étau autour d'un axe vertical. D'autre part, il doit être utilisable sur divers types de perceuse à colonne, notamment sur des embases ou des perceuses existantes.

Dans ce but, le dispositif de positionnement d'un étau selon la présente invention est caractérisé en ce qu'il comporte un organe de fixation de l'ensemble du dispositif à la colonne, un support d'étau, reposant sur une surface horizontale de l'embase, et un cadre de liaison réunissant ledit organe de fixation audit support d'étau, et en ce que le cadre de liaison est réglable en longueur, pour déplacer l'étau en translation dans une direction radiale par rapport à la colonne.

Selon une forme de réalisation avantageuse, ledit organe de fixation sur la colonne comporte une pince munie de deux mâchoires dont les formes sont adaptées à la forme de la section de la colonne. Les mâchoires de la pince peuvent être montées pivotantes sur un support commun et être reliées l'une à l'autre au moyen d'une vis de serrage comportant deux zones filetées dans des sens opposés, chacune de ces zones filetées s'engageant avec un écrou respectif monté sur l'une des mâchoires.

Selon une autre forme de réalisation, ledit organe de fixation sur la colonne comporte une plaque percée d'un orifice correspondant à la section de la colonne.

Le cadre de liaison comporte avantageusement un cadre rigide en forme de U, une traverse dont les extrémités sont coulissantes sur les branches du cadre rigide, et une tige filetée disposée longitudinalement entre les branches du cadre rigide pour maintenir en position réglable le cadre rigide par rapport à la traverse, cette traverse étant munie de moyens d'assemblage rapides avec l'organe de fixation à la colonne, et les extrémités des branches du cadre rigide étant munies de moyens

- 3 -

0126436

d'assemblage rapides avec le support d'étau. Ladite tige filetée peut
être montée coulissante dans des douilles solidaires du cadre rigide
et elle peut être engagée dans un alésage axial fileté d'un galet de
réglage qui est calé entre deux éléments transversaux du cadre rigide. Les extrémités des deux branches du cadre rigide en forme de U
peuvent être tubulaires et être assemblées par emboîtement avec deux
tiges cylindriques respectives, solidaires du support d'étau.

Dans une forme de réalisation préférée, le support d'étau est équipé
d'un dispositif de pivotement de l'étau autour d'un axe vertical. Le
support d'étau comporte avantageusement un bâti de support dont la
partie inférieure repose sur ladite embase, un plateau pivotant monté
sur le bâti de support de manière à pivoter autour d'un axe vertical,
et des moyens de verrouillage du pivotement du plateau, lequel est équipé de moyens de fixation de l'étau.

Pour réaliser le montage pivotant mentionné ci-dessus, le plateau peut
comporter à sa partie inférieure une saillie circulaire dont la circonférence présente un profil concave et coopère avec des bords semi-
circulaires à profil convexe de deux éléments de serrage montés sur
le bâti de support. Dans ce cas, les moyens de verrouillage du pivotement peuvent comporter une bague filetée pour bloquer le plateau par
friction entre les deux éléments de serrage. D'autre part, le support
d'étau peut comporter des moyens d'entraînement du plateau pivotant,
et le plateau peut être muni sur sa périphérie d'une graduation représentative de la position angulaire du plateau par rapport au bâti de
support.

Les moyens de fixation de l'étau sur le plateau comprennent avantageusement des rainures ménagées dans la face supérieure du plateau et orientées radialement par rapport à son axe de pivotement.

Selon une autre forme de réalisation du dispositif ne permettant pas
un pivotement de l'étau, le support d'étau comporte une traverse rigide disposée transversalement à la direction de translation de l'étau et munie de moyens d'assemblage avec le cadre de liaison, et au
moins un étrier démontable, pour maintenir l'étau en appui contre ladite traverse. Dans cette forme de réalisation, le support d'étau peut comporter une butée réglable pour une pièce à maintenir au moyen de l'étau, par exemple pour permettre de disposer dans une position constante une série de pièces identiques devant être percées toutes de la même manière.

Pour guider l'étau avec précision, le support d'étau comporte avantageusement dans sa partie inférieure, au moins une rainure de guidage, orientée dans la direction de translation de l'étau et coopérant avec au moins un boulon vissé dans l'embase.

La présente invention sera mieux comprise à l'aide de la description, donnée ci-dessous à titre d'exemple, d'une forme de réalisation préférée et en référence aux dessins annexés, dans lesquels :

La figure 1 est une vue éclatée en perspective du dispositif selon l'invention,

La figure 2 est une vue latérale en élévation du dispositif de la figure 1, illustrant également sa disposition sur une perceuse à colonne,

Les figures 3 et 4 sont des vues en plan d'un organe de fixation du dispositif à la colonne,

La figure 5 est une vue en coupe verticale d'un support d'étau, selon la ligne 5 - 5 de la figure 6,

La figure 6 est une vue latérale du support d'étau de la figure 5,

La figure 7 est une vue en plan d'une autre forme de réalisation du dispositif selon l'invention,

La figure 8 est une vue en plan d'une autre forme de l'organe de fixation à la colonne,

La figure 9 est une vue en élévation d'un élément de l'organe illustré à la figure 8,

La figure 10 est une vue en plan d'une autre forme de l'organe de fixation à la colonne, et

La figure 11 est une vue en plan qui illustre encore une autre forme de l'organe de fixation à la colonne.

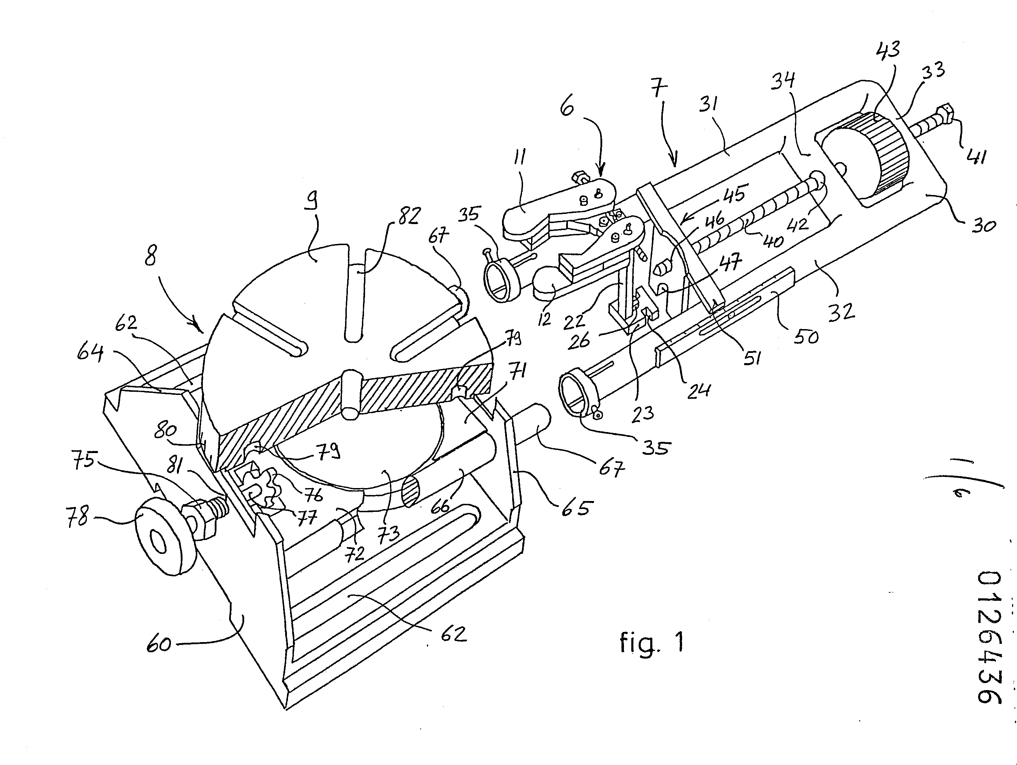

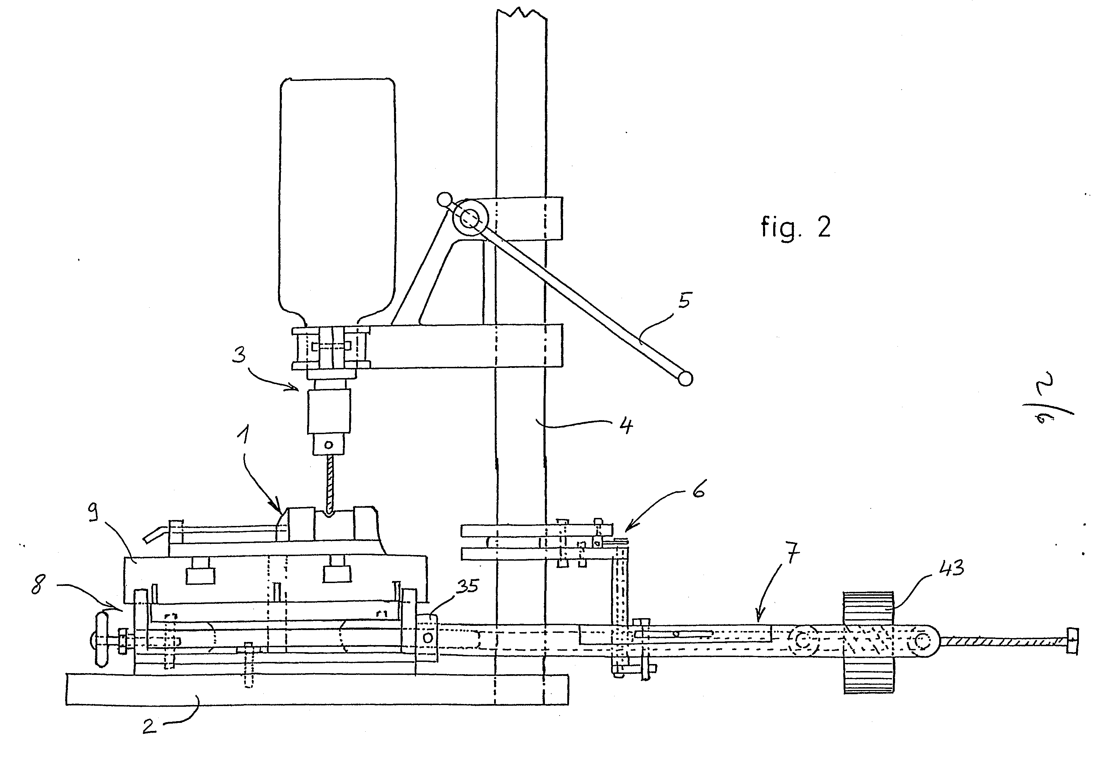

L'ensemble du dispositif selon l'invention, dans sa forme de réalisation préférée est illustré par les figures 1 et 2. Comme l'illustre la figure 2, il est agencé pour placer un étau 1 dans une position précise en plan sur une embase 2 qui supporte une perceuse 3 par l'intermédiaire d'une colonne verticale 4 solidaire de l'embase. Une telle perceuse à colonne peut coulisser verticalement sur la colonne sous l'action d'un levier 5.

Le dispositif de positionnement proprement dit comprend trois parties qui peuvent être facilement séparées les unes des autres, comme l'illustre la figure 1. Il s'agit d'un organe de fixation 6 de l'ensemble du dispositif à la colonne, d'un cadre de liaison 7 qui est réglable en longueur et d'un support d'étau 8 qui, dans cette forme de réalisation préférée, est équipée d'un plateau pivotant 9. Ces trois parties seront décrites successivement ci-dessous.

Dans sa forme préférée représentée sur les figures 1 à 4, l'organe de fixation sur la colonne comporte une pince munie de deux mâchoires 11 et 12 dont les formes sont adaptées à la forme de la section de la colonne. Par exemple, la pince illustrée ici est adaptée à une colonne de section hexagonale, mais elle s'adapte également à une colonne de section circulaire. Les mâchoires 11 et 12 sont montées pivotantes, au moyen de boulons respectifs 13 et 14 sur une plaque transversale 15 dans leur partie arrière, les mâchoires portant des boulons respectifs 16 et 17 dont la tête est taraudée transversalement, l'une avec un filetage à gauche et l'autre avec un filetage à droite. Une tige 18, qui est filetée à gauche sur une moitié de sa longueur et à droite sur l'autre moitié, est engagée dans ces têtes taraudées, pour permettre à l'utilisateur d'ouvrir ou de fermer les mâchoires 11 et 12 de la pince en faisant tourner la tige filetée 18 en agissant sur un écrou 19 qui est goupillé sur son extrémité.

La plaque transversale 15 est fixée au moyen d'un boulon 20 sur une plaque longitudinale 21 qui est fixée sur l'extrémité supérieure d'une tige carrée 22 (figure 1). L'extrémité inférieure de la tige carrée 22 est solidaire d'un taquet d'assemblage 23 qui porte sur deux côtés opposés une paire d'encoches verticales 24. La plaque longitudinale 21, la tige carrée 22 et le taquet d'assemblage 23 sont assemblés par un boulon 25 qui traverse longitudinalement la tige carrée 22. Un écrou 26, dont l'alésage fileté est orienté horizontalement, est soudé contre la tige carrée 22 au-dessus du taquet 23 ; sa fonction sera décrite plus loin.

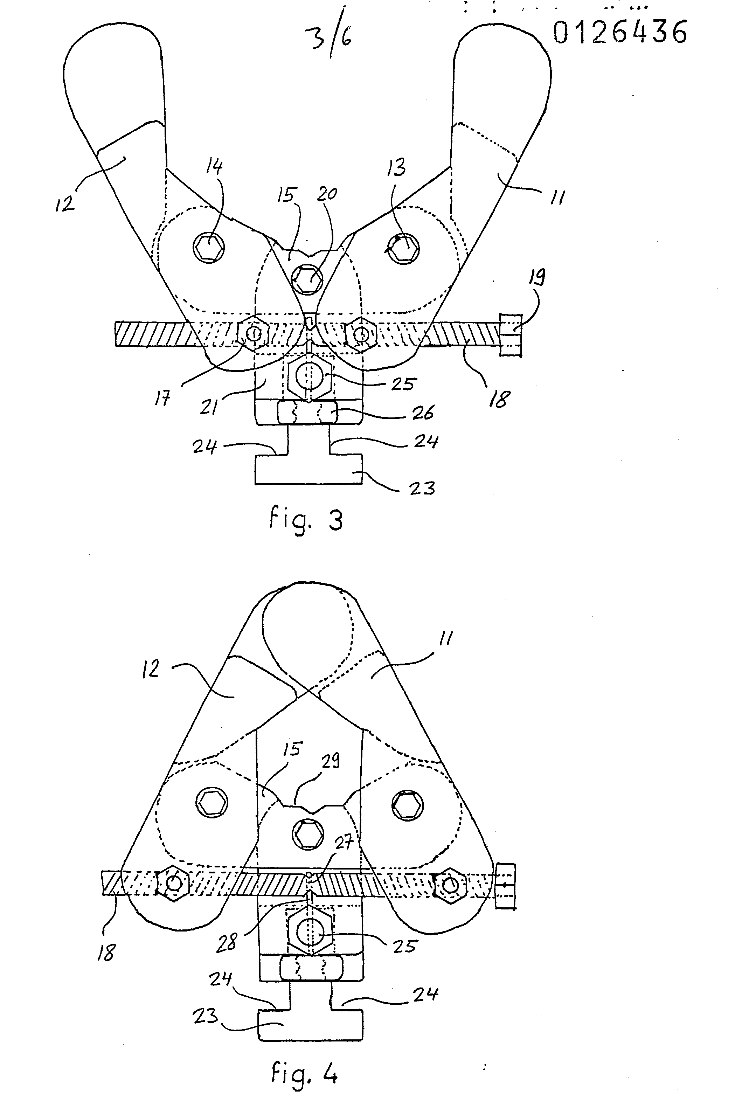

Lorsque l'organe de fixation 6 est dans la position ouverte illustrée par la figure 3, l'utilisateur peut appliquer la pince contre la colonne 4 et serrer les mâchoires 11 et 12 de la pince en faisant tourner la tige filetée 18. La pince prend alors la position illustrée par la figure 4. Pour être maintenue dans une position centrée, la tige filetée 18 comporte une gorge centrale 27 dans laquelle est engagé un doigt 28 qui est solidaire de la tête du boulon 25.

Pour s'adapter particulièrement à une colonne de section hexagonale, les mâchoires 11 et 12 comportent chacune un angle rentrant de 120 degrés. Le bord intérieur 29 de la plaque transversale 15 présente aussi un profil qui s'adapte à une colonne hexagonale. Ainsi, l'organe de fixation 6 garantit le maintien du taquet d'assemblage 23 dans une position stable par rapport à la colonne 4.

Le cadre de liaison 7 sera décrit en référence à la figure 1. Il comporte un cadre rigide 30 formé de deux longerons tubulaires parallèles 31 et 32 qui sont reliés par une entretoise arrière 33 et une entretoise intermédiaire 34. Le cadre rigide 30 affecte ainsi la forme générale d'un U. A leurs extrémités avant, c'est-à-dire situés au bout des branches du U, les longerons tubulaires 31 et 32 sont fendus longitudinalement et pourvus d'une bague de serrage 35, afin de permettre d'y fixer par emboîtement une paire de tiges cylindriques.

Une tige filetée 40, dont la tête porte un écrou solidaire 41, est montée axialement entre les deux longerons 31 et 32. Elle est montée coulissante dans des douilles 42 qui sont fixées à travers chacune des entretoises 33 et 34. Un galet de réglage 43, pourvu d'un alésage axial fileté, est engagé sur la tige filetée 40 entre les deux entretoises 33 et 34, qui le maintiennent en position axialement. Une traverse 45, dont les extrémités sont coulissantes sur les deux branches du cadre rigide 30 comportent un alésage fileté 46 dans lequel est engagé la tige filetée 40. La partie inférieure de la traverse 45 a la forme d'une plaque verticale dont le bord inférieur est pourvu d'une encoche 47. Cette plaque est ainsi agencée pour s'engager dans les encoches 24 du taquet d'assemblage 23 de l'organe de fixation 6. Une fois que le cadre de liaison 7 et l'organe de fixation 6 sont ainsi réunis, on peut visser l'extrémité de la tige filetée 40 dans l'écrou fixe 26 pour assembler rigidement le cadre de liaison à l'organe de fixation.

Ainsi, en faisant tourner le galet de réglage 43, l'utilisateur peut faire coulisser le cadre rigide 30 sur la tige filetée 40 et sur la traverse 45, et donc produire un déplacement longitudinal précis du cadre rigide 30 par rapport à l'organe de fixation 6. Pour repérer ce déplacement, le cadre rigide 30 porte une réglette graduée 50 qui est fixée sur le cadre par une vis engagée dans une rainure. Un repère 51 est tracé sur une extrémité de la traverse 45, en regard d'une graduation de la réglette 50, pour repérer avec précision la position ou les déplacements du cadre 30 ; ce repère peut comporter un vernier.

La forme de réalisation préférée du support d'étau 8 est illustrée par les figures 1, 5 et 6. Ce support 8 comporte un bâti de support 60 dont la partie inférieure 61 est horizontale et repose sur l'embase de la perceuse à.colonne. La partie inférieure du bâti comporte une paire de rainures de guidage longitudinales 62, dans lesquelles peuvent passer par exemple des boulons vissés dans l'embase, pour guider le déplacement en translation du bâti et/ou pour le fixer sur l'embase. Le bâti comprend en outre une paroi avant 64 et une paroi arrière 65, qui sont solidaires de deux tiges cylindriques parallèles 66, disposées longitudinalement. Chacune de ces tiges traversent la paroi arrière 65, de sorte que son extrémité 67 est saillante à l'extérieur du bâti. Ces extrémités 67 des tiges cylindriques 66 peuvent s'emboîter dans les longerons tubulaires du cadre de liaison 7, pour fixer ce cadre au support d'étau comme décrit précédemment.

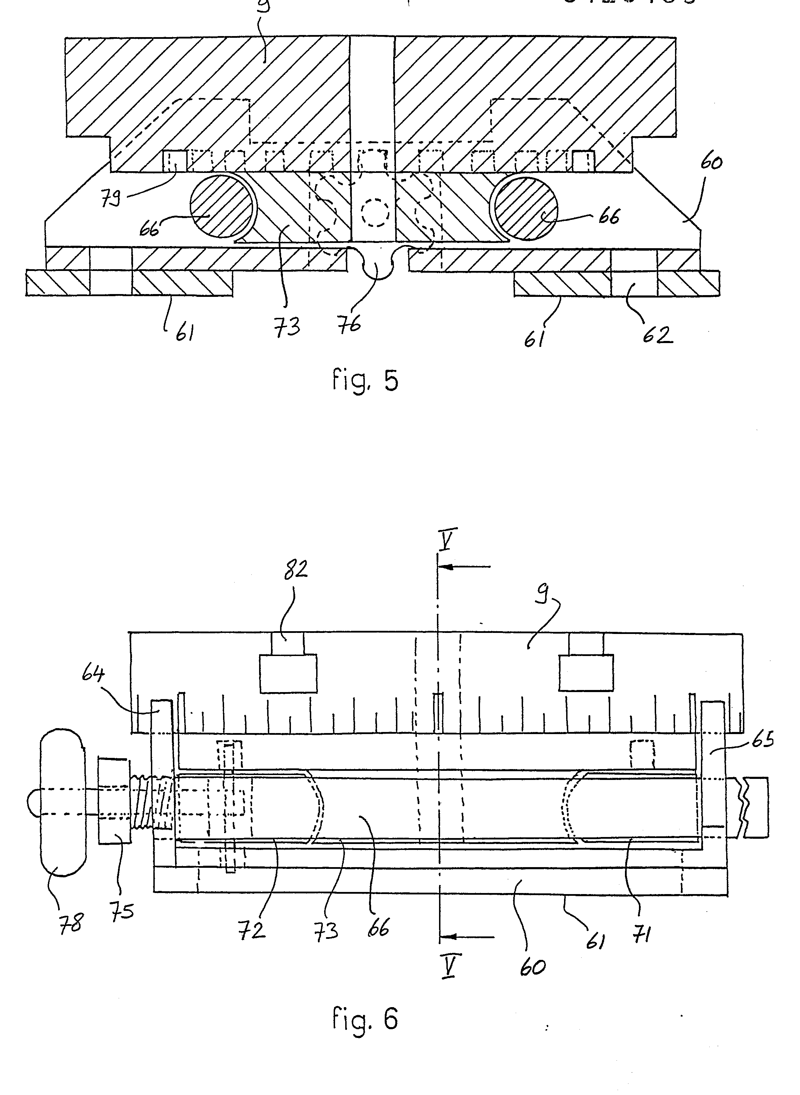

Le plateau pivotant 9 est monté sur le bâti de support 60 par l'intermédiaire de deux éléments de serrage 71 et 72 qui sont disposés entre les deux tiges cylindriques 66. Ces deux éléments de serrage comportent des faces latérales présentant un profil cylindrique concave adapté au profil des tiges cylindriques 66 ; ils sont ainsi montés de façon coulissante sur ces tiges. Du côté du centre du support d'étau, chacun des éléments de serrage 71 et 72 comporte un bord semi-circulaire présentant un profil convexe dont le rayon est le même que celui des tiges cylindriques 66. Pour sa part, le plateau pivotant 9 comporte à sa partie inférieure une saillie 73 en forme de disque, dont la circonférence présente un profil concave et coopère avec les bords semi-circulaires des deux éléments de serrage. Le bord de la saillie 73 s'engage également sur les deux tiges cylindriques 66 (figure 5). Ainsi, le plateau 9 est monté de manière pivotante sur le bâti de support 60.

Une bague filetée 75 est engagée dans un alésage fileté de la paroi avant 64. Lorsqu'on visse cette bague, elle s'applique contre l'élément de serrage 72 et elle le fait coulisser entre les tiges cylindriques 66, jusqu'à ce que le plateau pivotant soit bloqué par friction entre les deux éléments de serrage 71 et 72. L'utilisateur peut ainsi verrouiller ou libérer la rotation du plateau en agissant sur la bague de serrage 75.

D'autre part, le bâti de support 60 est équipé d'un mécanisme d'entraînement du plateau pivotant, constitué par une roue dentée 76 solidaire d'un axe 77 qui traverse axialement la douille de serrage 75. A l'extérieur du support d'étau, l'axe 77 est muni d'un bouton de commande 78, les dents de la roue dentée 76 s'engagent dans des cavités 79 qui sont disposées régulièrement sur un cercle à la face inférieure du plateau pivotant. La périphérie du plateau porte une graduation 80 qui coopère avec un repère 81 marqué sur le bâti pour définir la position angulaire du plateau pivotant par rapport au bâti de support.

0126436

Grâce au mécanisme de pivotement et au moyen de verrouillage décrits ci-dessus, l'utilisateur peut placer le plateau pivotant 9 dans une position angulaire initiale déterminée, puis l'amener et le fixer dans des positions successives qui sont décalées selon un angle donné par rapport à la position initiale.

Enfin, la face supérieure du plateau pivotant 9 comporte des rainures 82 orientées radialement, qui permettent de fixer solidement l'étau 1 sur le plateau d'une manière connue, par exemple au moyen de boulons dont les têtes sont engagées dans les rainures 82.

Le dispositif selon l'invention peut être installé très facilement par l'utilisateur sur une perceuse à colonne, selon la disposition d'ensemble illustrée par les figures 1 et 2. Après avoir fixé l'étau 1 sur le support d'étau 8, l'utilisateur peut assembler le cadre de liaison 7 à l'organe de fixation 6, comme décrit plus haut. Il fait passer les deux branches du cadre de liaison de part et d'autre de la colonne et il les assemble au support d'étau en les emboîtant sur les extrémités 67 des tiges cylindriques du bâti de support. Ainsi, le cadre de liaison est maintenu dans une position horizontale. Le montage est achevé en serrant sur la colonne la pince de l'organe de fixation 6.

Avec ce dispositif, on peut déplacer l'étau en translation sur l'embase, dans une direction radiale par rapport à la colonne, en faisant tourner le galet de réglage 43. Du fait que le déplacement est produit par une vis et qu'il est contrôlable sur une graduation, le positionnement et les déplacements de l'étau sont effectués avec précision. En outre, la direction de translation du support d'étau est maintenue fermement par les boulons engagés dans les rainures 62 et par l'organe de fixation 6.

Ensuite, l'utilisateur peut faire pivoter l'étau avec précision au moyen du bouton de commande 78 et en contrôlant sa position angulaire à l'aide de la graduation du plateau. Selon la position de l'étau sur le plateau 9, on peut faire décrire à la pièce à travailler des trajectoires de rayon plus ou moins grandes.

Il faut remarquer que le dispositif selon l'invention est particulièrement facile à monter et à démonter par un bricoleur. En particulier, on peut aisément retirer de l'embase le support d'étau sans déposer l'organe de fixation et le cadre de liaison.

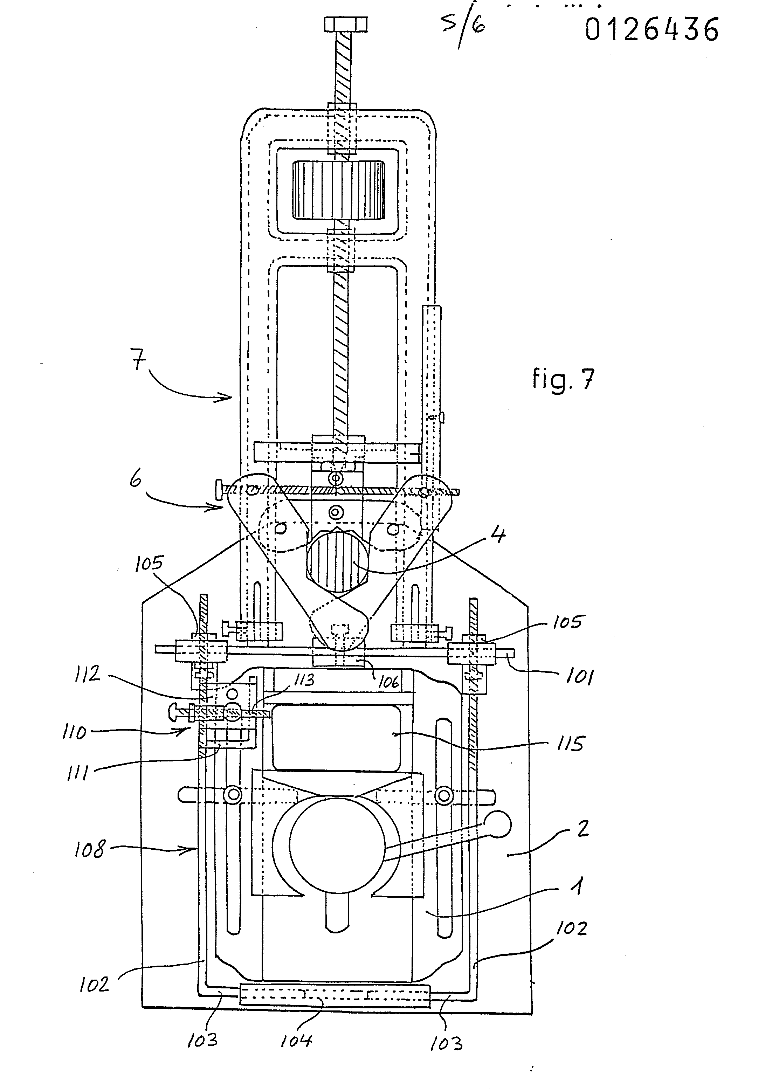

D'autres formes de réalisation du dispositif selon l'invention seront décrits maintenant en référence aux figures 7 à 11.

Le dispositif représenté en plan sur la figure 7 comporte un organe de fixation 6 et un cadre de liaison 7 qui sont tels que décrits précédemment. Par contre, le support d'étau 108 est différent car il n'est pas équipé d'un dispositif de pivotement de l'étau. Il comprend une traverse transversale rigide 101 sur laquelle sont vissées en position réglables deux tiges coudées 102 qui sont filetées sur une partie de leur longueur. La partie avant 103 de chacune de ces tiges est coudée à angle droit et elle est engagée dans un manchon rigide 104. En serrant des écrous 105 engagés sur les tiges coudées 102, on fixe l'étau par serrage entre le manchon 104 et une butée 106 solidaire de la traverse transversale 101.

Le support d'étau comporte en outre un organe d'indexation 110 comprenant une tige coudée en U 111, fixée sur la traverse 101, un curseur 112 monté coulissant entre les deux branches de la tige coudée en U et une vis horizontale de réglage 113 engagée dans un alésage fileté de ce curseur. L'extrémité de la vis de réglage 113 constitue une butée pour une pièce à percer 115, placée entre les mors de l'étau 1. Grâce à cet organe d'indexation, on peut placer successivement dans la même position en plan une série de pièces 115 identiques.

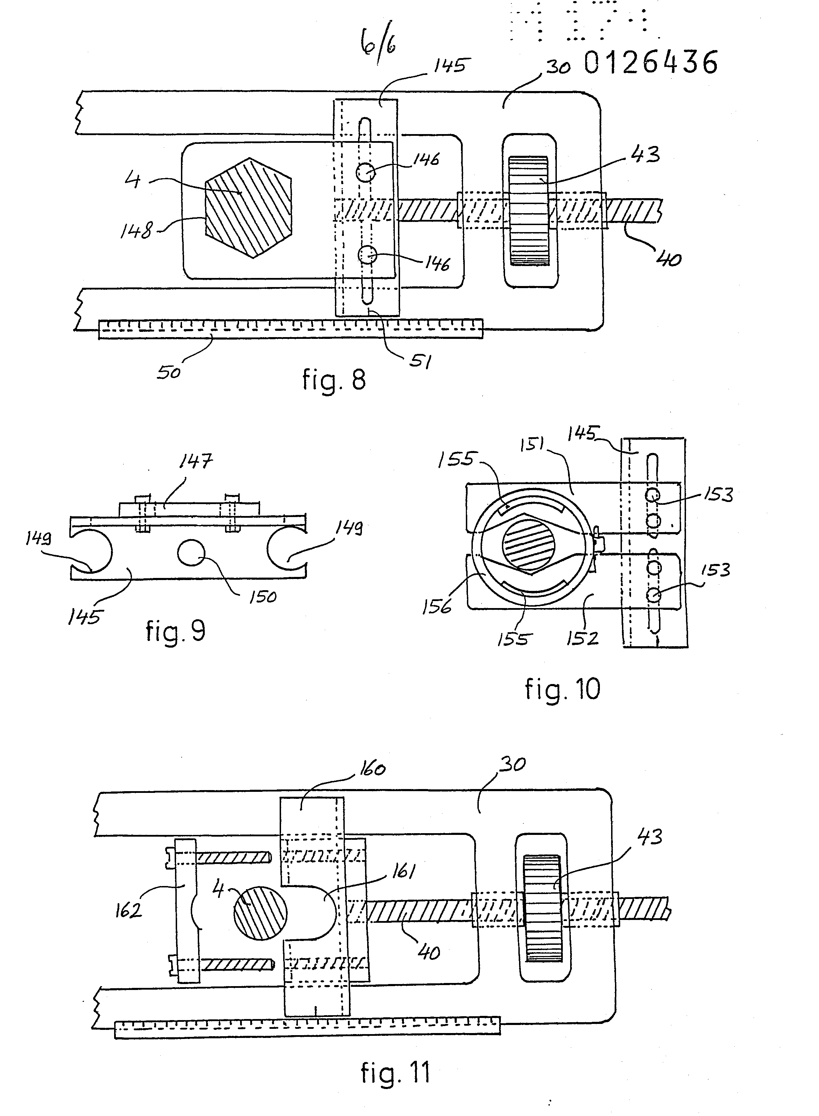

La figure 8 représente en plan une autre forme de réalisation de l'organe de fixation sur la colonne. Une traverse 145 coulissant sur les deux branches du cadre rigide 30 est fixée à un bloc 147 pourvu d'un évidement vertical 148 dont la section est sensiblement identique à celle de la colonne 4. Ce bloc est engagé sur la colonne et il y demeure en principe en permanence. Il peut être constitué par une simple plaque. Comme dans les formes précédentes, la traverse 145 est munie d'un repère 51 qui coopère avec la graduation d'une réglette.

graduée 50.

La figure 9 représente la traverse 145 en élévation. Celle-ci comporte à ses extrémités des logements cylindriques 149, partiellement ouverts, qui s'engagent sur les branches tubulaires du cadre 30, et un alésage axial fileté 150 qui reçoit la tige filetée 40.

La figure 10 illustre une forme particulière de pinces montées sur la traverse 145. Cette pince comporte des mâchoires 151 et 152 qui sont montées sur la traverse 145 au moyen de boulons 153. Les deux mâchoires comportent des pattes verticales incurvées 155 que l'on peut rapprocher au moyen d'une bague de serrage 156.

Enfin, la figure 11 représente une vue de la traverse 160 qui comporte un évidement 161 dans lequel la colonne 4 est serrée au moyen d'un étrier 162 vissé à la traverse. Cette traverse est montée sur le cadre 30 comme précédemment.

La présente invention n'est pas limitée aux formes de réalisation décrites ici. Elle s'étend à toutes modifications ou variantes évidentes pour l'homme de l'art.

0126436

## Revendications

1. Dispositif de positionnement d'un étau sur une embase solidaire d'une colonne verticale, notamment une embase de perceuse à colonne, caractérisé en ce qu'il comporte un organe de fixation (6) de l'ensemble du dispositif à colonne (4), un support d'étau (8), reposant sur une surface horizontale d'embase, et un cadre de liaison (7) réunissant ledit organe de fixation audit support d'étau, et en ce que le cadre de liaison (7) est réglable en longueur pour déplacer l'étau (1) en translation dans une direction radiale par rapport à la colonne.

2. Dispositif selon la revendication 1, caractérisé en ce que ledit organe de fixation (6) sur la colonne comporte une pince munie de deux mâchoires (11, 12) dont les formes sont adaptées à la forme de la section de la colonne.

3. Dispositif selon la revendication 2, caractérisé en ce que les mâchoires (11, 12) de la pince sont montées pivotantes sur un support commun et sont reliées l'une à l'autre au moyen d'une vis de serrage (18) comportant deux zones filetées dans des sens opposés, chacune de ces zones filetées s'engageant avec un écrou respectif monté sur l'une des mâchoires.

4. Dispositif selon la revendication 1, caractérisé en ce que ledit organe de fixation sur la colonne comporte une plaque (147) percée d'un orifice correspondant à la section de la colonne.

5. Dispositif selon la revendication 1, caractérisé en ce que le cadre de liaison (7) comporte un cadre rigide (30) en forme de U, une traverse (45) dont les extrémités sont coulissantes sur les branches du cadre rigide, et une tige filetée (40) disposée longitudinalement entre les branches du cadre rigide pour maintenir en position réglable le cadre rigide (30) par rapport à la traverse (45), cette traverse étant munie de moyens d'assemblage rapides (40, 47) avec l'organe de fixation à la colonne, et les extrémités des branches du cadre rigide étant munies de moyens d'assemblage rapides (35) avec le support d'étau (8).

0126436

6. Dispositif selon la revendication 5, caractérisé en ce que ladite tige filetée (40) est montée coulissante dans des douilles (42) solidaires du cadre rigide (30) et en ce qu'elle est engagée dans un alésage axial fileté d'un galet de réglage (43) qui est calé entre deux éléments transversaux du cadre rigide.

7. Dispositif selon la revendication 5, caractérisé en ce que les extrémités des deux branches (31, 32) du cadre rigide en forme de U (30) sont tubulaires et sont assemblées par emboîtement avec deux tiges cylindriques respectives (67) solidaires du support d'étau.

8. Dispositif selon la revendication 1, caractérisé en ce que le support d'étau (8) est équipé d'un dispositif de pivotement de l'étau autour d'un axe vertical.

9. Dispositif selon la revendication 8, caractérisé en ce que le support d'étau (8) comporte un bâti de support (60) dont la partie inférieure repose sur ladite embase (2), un plateau pivotant (9) monté sur le bâti de support de manière à pivoter autour d'un axe vertical, et des moyens de verrouillage (71, 72, 75) du pivotement du plateau, et en ce que le plateau comporte des moyens (82) de fixation de l'étau.

10. Dispositif selon la revendication 9, caractérisé en ce que le plateau (9) comporte à sa partie inférieure une saillie circulaire (73) dont la circonférence présente un profil concave et coopère avec des bords semi-circulaires à profil convexe de deux éléments de serrage (71, 72) montés sur le bâti de support (60), et en ce que les moyens de verrouillage du pivotement comportent une bague filetée (75) pour bloquer le plateau par friction entre les deux éléments de serrage (71, 72).

11. Dispositif selon la revendication 9, caractérisé en ce que le support d'étau (60) comporte des moyens d'entraînement (76) du plateau pivotant, et en ce que le plateau (9) comporte sur sa périphérie une graduation (80) représentative de la position angulaire du plateau par rapport au bâti de support.

12. Dispositif selon l'une quelconque des revendications 9 à 11, caractérisé en ce que les moyens de fixation de l'étau (1) sur le plateau (9) comprennent des rainures (82) ménagées dans la face supérieure du plateau et orientées radialement par rapport à son axe de pivotement.

13. Dispositif selon la revendication 1, caractérisé en ce que le support d'étau (8) comporte une traverse rigide (101) disposée transversalement à la direction de translation de l'étau, et au moins un étrier démontable (102 et 104) pour maintenir l'étau en appui contre ladite traverse.

14. Dispositif selon la revendication 13, caractérisé en ce que le support d'étau comporte une butée réglable (113) pour une pièce à maintenir au moyen de l'étau.

15. Dispositif selon l'une quelconque des revendications précédentes, caractérisé en ce que le support d'étau comporte dans sa partie inférieure au moins une rainure de guidage (62) orientée dans la direction de translation de l'étau et coopérant avec au moins un boulon vissé dans l'embase (2).

fig. 1

fig. 2

0126436

fig. 3

fig. 4

0126436

fig. 5

fig. 6

fig. 7

0126436

fig. 8

fig. 9

fig. 10

fig. 11

Office européen
des brevets

**RAPPORT DE RECHERCHE EUROPEENNE**

0126436
Numéro de la demande

EP 84 10 5602

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,A | WO-A-8 203 587 (INTERNATIONAL DESIGN)<br>* Abrégé; figure 1 * | 1 | B 25 B 1/22<br>B 23 B 45/14<br>B 23 Q 3/06 |
| A | US-A-3 495 795 (BROWN)<br>* Figures 1,2 * | 1 | |
| A | US-A-2 832 395 (FISHER)<br>* Figure 7 * | 1 | |

DOMAINES TECHNIQUES RECHERCHES (Int. Cl. ³)

B 25 B 1/00
B 23 Q 3/00
B 25 H 1/00
B 23 B 45/00

Le présent rapport de recherche a été établi pour toutes les revendications

| Lieu de la recherche<br>LA HAYE | Date d'achèvement de la recherche<br>22-08-1984 | Examinateur<br>LOKERE H.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82